# EUROPEAN PATENT APPLICATION

(11) **EP 4 836 317 A1**
(43) Date of publication of application: **04.11.2026**
(21) Application number: 23963072.6
(22) Date of filing: 26.12.2023
(51) Int. Cl.: H04B 10/075

(54) **ESTIMATION DEVICE AND ESTIMATION METHOD**

(71) Applicant: NTT, Inc., Tokyo 100-8116 (JP)
(72) Inventor: MANO Toru, Musashino-shi, Tokyo 180-8585 (JP); ANAZAWA Kazuya, Musashino-shi, Tokyo 180-8585 (JP)
(74) Representative: Hoffmann Eitle
(86) International application number: PCT/JP2023/046743
(87) International publication number: WO 2025/141718

(57) **Abstract**

An estimation device 13 includes: a measurement unit 131 that measures a value of signal quality for each received optical power at an optical receiver, for an optical transmitter and the optical receiver that are connected via a transmission line; a first calculation unit 132 that calculates first signal distortion caused by the optical transmitter and the optical receiver, the first signal distortion being dependent on received optical power, and second signal distortion caused by the optical transmitter and the optical receiver, the second signal distortion being independent of the received optical power, by using a measured value of the signal quality for each of the received optical powers at the optical receiver; and a second calculation unit 133 that calculates a relationship between the signal quality and transmission quality of the optical transmitter and the optical receiver, by calculating a value of the signal quality for each optical noise amount by using the first signal distortion, the second signal distortion, and third signal distortion caused by the transmission line, the third signal distortion being calculated from an optical noise amount.

## Description

### Technical Field

The present disclosure relates to an estimation device and an estimation method.

### Background Art

Estimation of signal quality (for example, a Q-factor or Pre-FEC BER) and measurement of transmission quality (for example, GSNR) are essential techniques for optical network design, operation, and monitoring. In order to estimate the signal quality and measure the transmission quality with high accuracy, it is necessary to grasp the BER-OSNR characteristic of an optical transceiver in a back-to-back configuration in which an optical transmitter and an optical receiver are directly connected by an optical fiber having a very short propagation distance, or the like.

For example, in the back-to-back configuration, an optical signal from the optical transmitter and optical noise from an optical noise generation device are multiplexed by a multiplexer, and an optical noise amount (OSNR) and signal quality (for example, Pre-FEC BER) at a time when multiplexed light has been input to the optical receiver are measured. When a measured value is plotted on a graph in which a horizontal axis indicates the optical noise amount (transmission quality) and a vertical axis indicates the signal quality, a BER-OSNR characteristic in which the signal quality decreases as the optical noise amount increases is obtained.

By using this BER-OSNR characteristic, the signal quality of a received signal can be estimated from transmission quality that has been measured or estimated in advance or transmission quality that has been calculated by using a tool such as GNPy (see Non Patent Literature 1). It is sufficient if a value of signal quality that corresponds to a value of the calculated transmission quality is read. Conversely, transmission quality can be estimated from signal quality that has been measured in an optical transceiver (see Non Patent Literature 2). It is sufficient if a value of transmission quality (an optical noise amount) that corresponds to a value of the measured signal quality is read.

### Citation List

### Non Patent Literature

Non Patent Literature 1: Vittorio Curri, "GNPy model of the physical layer for open and disaggregated optical networking [Invited]", JOURNAL OF Optical Communications and Networking, Vol.14, No.6, June 2022, C92-C104
Non Patent Literature 2: Kaida Kaeval, and 8 others, "QoT assessment of the optical spectrum as a service in disaggregated network scenarios", JOURNAL OF Optical Communications and Networking, Vol.13, No.10, October 2021, E1-E12

### Summary of Invention

### Technical Problem

However, in a conventional method for measuring the BER-OSNR characteristic, in addition to the optical transmitter and the optical receiver, many optical devices, such as an optical amplifier that amplifies an optical signal from the optical transmitter, a variable optical attenuator that variably attenuates the amplified optical signal, an optical noise generation device that generates optical noise, an optical amplifier that amplifies the optical noise, a variable optical attenuator that variably attenuates the amplified optical noise, a multiplexer that multiplexes the amplified and variably attenuated optical signal and the amplified and variably attenuated optical noise, an optical bandpass filter that only transmits desired light of multiplexed light, a demultiplexer that demultiplexes the desired light to the optical receiver and an optical spectrum analyzer, and the optical spectrum analyzer that analyzes demultiplexed light, are used to measure a value of signal quality for each optical noise amount, and this has resulted in increases in a cost and time.

The present disclosure has been made in view of the circumstances described above, and an object of the present disclosure is to provide a technique that is capable of estimating a relationship between signal quality and transmission quality of an optical transceiver at a low cost.

### Solution to Problem

An estimation device in one aspect of the present disclosure includes: a measurement unit that measures a value of signal quality for each received optical power at an optical receiver, for an optical transmitter and the optical receiver that are connected via a transmission line; a first calculation unit that calculates first signal distortion caused by the optical transmitter and the optical receiver, the first signal distortion being dependent on received optical power, and second signal distortion caused by the optical transmitter and the optical receiver, the second signal distortion being independent of the received optical power, by using a measured value of the signal quality for each of the received optical powers at the optical receiver; and a second calculation unit that calculates a relationship between the signal quality and transmission quality of the optical transmitter and the optical receiver, by calculating a value of the signal quality for each optical noise amount by using the first signal distortion, the second signal distortion, and third signal distortion caused by the transmission line, the third signal distortion being calculated from an optical noise amount.

An estimation method in one aspect of the present disclosure is an estimation method performed by an estimation device, the estimation method including: measuring a value of signal quality for each received optical power at an optical receiver, for an optical transmitter and the optical receiver that are connected via a transmission line; calculating first signal distortion caused by the optical transmitter and the optical receiver, the first signal distortion being dependent on received optical power, and second signal distortion caused by the optical transmitter and the optical receiver, the second signal distortion being independent of the received optical power, by using a measured value of the signal quality for each of the received optical powers at the optical receiver; and calculating a relationship between the signal quality and transmission quality of the optical transmitter and the optical receiver, by calculating a value of the signal quality for each optical noise amount by using the first signal distortion, the second signal distortion, and third signal distortion caused by the transmission line, the third signal distortion being calculated from an optical noise amount.

### Advantageous Effects of Invention

According to the present disclosure, it is possible to provide a technique that is capable of estimating a relationship between signal quality and transmission quality of an optical transceiver at a low cost.

### Brief Description of Drawings

[Fig. 1] Fig. 1 is a diagram illustrating a configuration example of an estimation system according to the present embodiment.
[Fig. 2] Fig. 2 is a diagram illustrating another configuration example of a transmission system.
[Fig. 3] Fig. 3 is a diagram illustrating a result of measuring a value of signal quality for each received optical power.
[Fig. 4] Fig. 4 is a diagram illustrating a result of comparison between an estimated value and an actually measured value of a BER-OSNR characteristic.
[Fig. 5] Fig. 5 is a flowchart illustrating a method for calculating the BER-OSNR characteristic.
[Fig. 6] Fig. 6 is a diagram illustrating an example of a hardware configuration of an estimation device.

### Description of Embodiments

Hereinafter, an embodiment of the present disclosure will be described with reference to the drawings. In the drawings, the same portions are denoted by the same reference signs, and the description thereof will be omitted.

### [Overview of Present Disclosure]

The present disclosure discloses a method for causing a computer to estimate a BER-OSNR characteristic of an optical transceiver without using an optical device such as an optical amplifier, a variable optical attenuator, an optical noise generation device, a multiplexer, an optical bandpass filter, a demultiplexer, or an optical spectrum analyzer. However, the use of an optical attenuator is not excluded.

Specifically, (a) a value of signal quality (a change in the value of the signal quality) is measured and recorded while changing received optical power at an optical receiver, and from a result, (a1) signal distortion caused by the optical transceiver that is dependent on the received optical power and (a2) signal distortion caused by the optical transceiver that is independent of the received optical power are calculated.

In addition, (b) the BER-OSNR characteristic of the optical transceiver is estimated, by calculating signal quality (for example, a Q-factor or Pre-FEC BER) for each optical noise amount by using the two types of signal distortion described above caused by the optical transceiver and signal distortion caused by a transmission line that is calculated from an optical noise amount (OSNR) .

As a result, a relationship between the signal quality and the transmission quality of the optical transceiver can be estimated at a low cost.

### [Configuration of Estimation System]

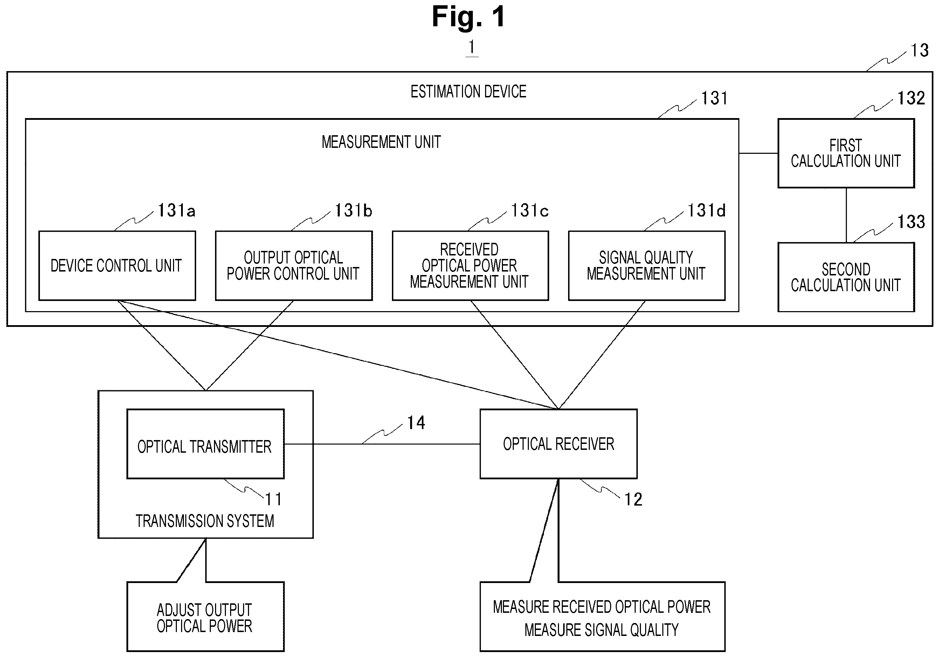

Fig. 1 is a diagram illustrating a configuration example of an estimation system 1 according to the present embodiment. The estimation system 1 includes a transmission system including an optical transmitter 11, an optical receiver 12, and an estimation device 13.

The optical transmitter 11 is a device that transmits an optical signal to the optical receiver 12. The optical receiver 12 is a device that receives an optical signal from the optical transmitter 11. The optical transmitter 11 and the optical receiver 12 have a back-to-back configuration in which the optical transmitter 11 and the optical receiver 12 are connected by an optical fiber (a transmission line) 14 having a very short propagation distance.

The estimation device 13 is a device that is connected to each of the transmission system and the optical receiver 12 and estimates a BER-OSNR characteristic of an optical transceiver (11 and 12) (a relationship between signal quality and transmission quality of the optical transceiver (11 and 12)).

The estimation device 13 includes a measurement unit 131, a first calculation unit 132, and a second calculation unit 133.

The measurement unit 131 has a function of measuring and recording a value of signal quality (a change in the value of the signal quality) for each received optical power at the optical receiver 12, while changing received optical power at the optical receiver 12 by adjusting output optical power from the transmitting system.

The output optical power from the transmission system is roughly equivalent to the received optical power at the optical receiver 12, and if the output optical power is adjusted in the transmission system, the received optical power received by the optical receiver 12 also changes. For example, the measurement unit 131 measures and records the signal quality, while changing received optical power at the optical receiver 12 by adjusting output optical power at the optical transmitter 11.

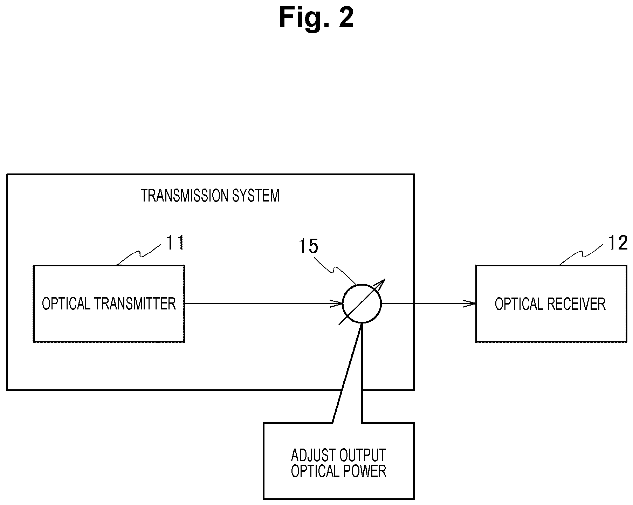

In addition, as illustrated in Fig. 2, a variable attenuator 15 or a plurality of attenuators (not illustrated) having fixed values different from each other may be connected between the optical transmitter 11 and the optical receiver 12, and the output optical power may be adjusted by the variable attenuator 15 or the plurality of attenuators to change the received optical power at the optical receiver 12. It is sufficient if the transmission system is configured to be able to vary the received optical power at the optical receiver 12.

In order to achieve the function, the measurement unit 131 includes a device control unit 131a that performs setting or the like of transmission and reception of an optical signal on the optical transceiver (11 and 12), an output optical power control unit 131b that adjusts, in the transmission system, output optical power of an optical signal to be output from the optical transmitter 11 in order to change received optical power at the optical receiver 12, a received optical power measurement unit 131c that measures and records received optical power of an optical signal that has been input to the optical receiver 12, and a signal quality measurement unit 131d that measures a value of signal quality of the optical signal received by the optical receiver 12 and records the value in association with the received optical power at the time of measurement, as illustrated in Fig. 1.

The first calculation unit 132 has a function of calculating signal distortion caused by the optical transceiver (11 and 12) that is dependent on the received optical power (first signal distortion) and signal distortion caused by the optical transceiver (11 and 12) that is independent of the received optical power (second signal distortion), by using a measured value of signal quality for each received optical power that has been measured by the measurement unit 131.

For example, the first calculation unit 132 calculates the first signal distortion and the second signal distortion in such a way that the measured value of signal quality for each received optical power coincides with a calculated value of signal quality that is calculated from the sum of the first signal distortion multiplied by the received optical power and the second signal distortion.

The second calculation unit 133 has a function of estimating and calculating a BER-OSNR characteristic of the optical transceiver (11 and 12), by calculating a value (for example, a Q-factor or Pre-FEC BER) of signal quality for each optical noise amount by using the two types of signal distortion described above caused by the optical transceiver (11 and 12) (the first signal distortion and the second signal distortion) that have been calculated by the first calculation unit 132 and signal distortion caused by the optical fiber 14 (third signal distortion) that is calculated from the optical noise amount (OSNR).

For example, the second calculation unit 133 calculates signal distortion caused by the optical transceiver (11 and 12) at a time when the received optical power has a predetermined value, from results of calculating the first signal distortion and the second signal distortion. Thereafter, the second calculation unit 133 further calculates third signal distortion that corresponds to each optical noise amount, and combines these two calculation results to calculate a value of signal quality for each optical noise amount, and therefore the second calculation unit 133 calculates the BER-OSNR characteristic of the optical transceiver (11 and 12).

Specifically, for example, the second calculation unit 133 calculates the BER-OSNR characteristic of the optical transceiver (11 and 12), by calculating a value of signal quality for each optical noise amount with respect to predetermined received optical power by using a formula for calculating a value of signal quality from the sum of the first signal distortion multiplied by received optical power, the second signal distortion, and the third signal distortion.

### [Method for Calculating Signal Distortion Caused by Optical Transceiver]

A method for calculating signal distortion caused by the optical transceiver (11 and 12) that is performed by the first calculation unit 132 will be described.

In the present embodiment, an existing BER-OSNR model that does not take signal distortion due to a change in received optical power into consideration is extended in such a way that signal distortion due to received optical power can be taken into consideration.

The existing BER-OSNR model is expressed as Formula (1).
[Math. 1] $\left.\begin{matrix}BER = Ψ \left(SNR\right) \\ {SNR}^{- 1} = {SNR}_{TRX}^{- 1} + {SNR}_{ASE}^{- 1} + {SNR}_{NLI}^{- 1} \\ {SNR}_{ASE} = OSNR \frac{Δ f}{Rξ}\end{matrix}\right\}$ (1)

Formula (1) is described in Toru Mano, and 9 others, "Modeling Transceiver BER-OSNR Characteristic for QoT Estimation in Short-Reach Systems", 2023 International Conference on Optical Network Design and Modeling (ONDM) (ONDM 2023), Coimbra, Portugal.

Ψ is a function determined by a signal modulation scheme. In the case of DP-16QAM, Ψ(SNR) = (3/8) erfc(√(SNR/10)) is established. SNR_{TRX} is the SNR of noise generated in the optical transceiver (11 and 12). SNR_{ASE} is the SNR of ASE noise generated in an optical noise generation device, an optical amplifier, or the like (ASE), and is obtained by converting OSNR into SNR. SNR_{NLI} is the SNR of NLI noise generated by a fiber nonlinear effect due to WDM or the like.

Δf is a noise measurement bandwidth in the OSNR measurement. Normally, Δf = 12.5 GHz is established. R is a signal bandwidth. In the case of 400G DP-16QAM standardized by OpenROADM, R = about 63.1 GHz is established. ξ is a constant of one or more that indicates incompleteness of an optical receiver filter.

In the back-to-back configuration, there is no wavelength multiplexing, and the propagation distance of the optical fiber 14 is also very short, and therefore an influence of a fiber nonlinear optical effect can be ignored. Therefore, in the description below, consideration will be given while excluding SNR_{NLI}.

In order to take signal distortion due to received optical power into consideration, the existing BER-OSNR model expressed as Formula (1) is extended as expressed as Formula (2) where the received optical power is Pᵢₙ.
[Math. 2] $\left.\begin{matrix}BER = Ψ \left(SNR\right) \\ {SNR}^{- 1} = {SNR}_{TRX}^{- 1} + {SNR}_{ASE}^{- 1} \\ {SNR}_{TRX}^{- 1} = {SNR}_{TRX - in}^{- 1} + {SNR}_{in}^{- 1} {P}_{in}^{- 1} \\ {SNR}_{ASE} = OSNR \frac{Δ f}{Rξ}\end{matrix}\right\}$ (2)

SNR_{TRX-in} is SNR obtained by excluding noise relating to the received optical power Pᵢₙ from noise generated in the optical transceiver (11 and 12). The SNR_{TRX-in} corresponds to signal distortion caused by the optical transceiver (11 and 12) that is independent of the received optical power Pᵢₙ (the second signal distortion).

SNRᵢₙPᵢₙ is the SNR of noise relating to the received optical power Pᵢₙ. The SNRᵢₙ corresponds to signal distortion caused by the optical transceiver (11 and 12) that is dependent on the received optical power Pᵢₙ (the first signal distortion). If the received optical power Pᵢₙ decreases, SNRᵢₙPᵢₙ also decreases, and the signal quality deteriorates.

From Formula (2), a relationship between the received optical power Pᵢₙ and the signal quality (BER) can be organized as expressed as Formula (3).
[Math. 3] $\left.\begin{matrix}BER = Ψ \left(SNR\right) \\ {SNR}^{- 1} = {SNR}_{TRX - in}^{- 1} + {SNR}_{in}^{- 1} {P}_{in}^{- 1}\end{matrix}\right\}$ (3)

The back-to-back configuration illustrated in Fig. 1 does not include an optical noise generation device, an optical amplifier, or the like (ASE), and therefore SNR_{ASE} that corresponds to ASE noise from the optical noise generation device is excluded.

From Formula (3), a value (BER) of signal quality is determined by the received optical power Pᵢₙ, a parameter (SNR_{TRX-in}) of the signal distortion caused by the optical transceiver (11 and 12) that is independent of the received optical power Pᵢₙ, and a parameter (SNRᵢₙ) of the signal distortion caused by the optical transceiver (11 and 12) that is dependent on the received optical power Pᵢₙ.

Therefore, the first calculation unit 132 calculates the two parameters (SNR_{TPX-in} and SNRᵢₙ) by using the least-squares method or the like in such a way that a measured value (BER) of signal quality for each received optical power Pᵢₙ that has been measured by the measurement unit 131 coincides with a calculated value (BER) of signal quality that is calculated according to Formula (3).

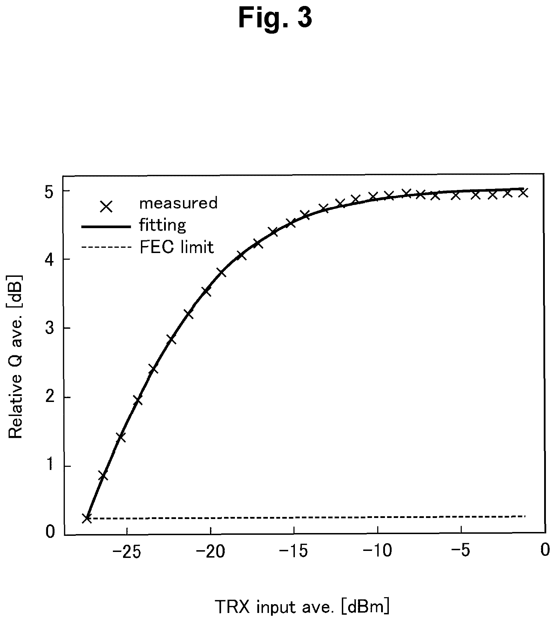

Fig. 3 is a diagram illustrating a result of measuring a value (BER) of signal quality for each received optical power Pᵢₙ that has been measured by the measurement unit 131. A horizontal axis indicates the received optical power Pᵢₙ. A vertical axis indicates a value (a Q-factor) of signal quality. The Q-factor and the BER have a relationship of BER = (1/2) erfc(Q/√(2)), and have one-to-one correspondence. The two parameters (SNR_{TPX-in} and SNRᵢₙ) can be calculated by performing parameter fitting by using the least-squares method.

### [Method for Calculating BER-OSNR Characteristic]

A method for calculating a BER-OSNR characteristic that is performed by the second calculation unit 133 will be described.

In order to estimate the BER-OSNR characteristic, the extended BER-OSNR model of Formula (2) is used. The BER-OSNR characteristic is calculated by substituting respective values of the two parameters (SNR_{TPX-in} and SNRᵢₙ) calculated by the first calculation unit 132 into Formula (2). Note that SNR_{ASE} in Formula (2) corresponds to the signal distortion caused by the optical fiber 14 (the third signal distortion) that is calculated from the optical noise amount (OSNR).

A method for calculating a BER-OSNR characteristic at a time when the received optical power Pᵢₙ is p will be described.

In order to estimate the BER-OSNR characteristic, the second calculation unit 133 calculates signal quality (BER) for each OSNR. From the extended BER-OSNR model of Formula (2), a value (BER) of signal quality at a time when the received optical power Pᵢₙ is p and OSNR is r can be expressed as Formula (4) by using the two parameters (SNR_{TRX-in} and SNRᵢₙ) calculated by the first calculation unit 132.
[Math. 4] $\left.\begin{matrix}BER = Ψ \left(SNR\right) \\ {SNR}^{- 1} = {SNR}_{TRX - in}^{- 1} + {SNR}_{in}^{- 1} p + {SNR}_{ASE}^{- 1} \\ {SNR}_{ASE} = r \frac{Δ f}{Rξ}\end{matrix}\right\}$ (4)

As will be described again, in a formula in which a left-hand side is SNR⁻¹, SNR_{TRX-in} is a parameter of signal distortion caused by the optical transceiver (11 and 12) that is independent of the received optical power Pᵢₙ (the second signal distortion), SNRᵢₙ is a parameter of signal distortion caused by the optical transceiver (11 and 12) that is dependent on the received optical power Pᵢₙ (the first signal distortion), and SNR_{ASE} is a parameter of signal distortion caused by the optical fiber 14 (the third signal distortion) that is calculated from OSNR.

By using Formula (4), signal quality (BER) for each OSNR can be calculated, and the BER-OSNR characteristic can be estimated.

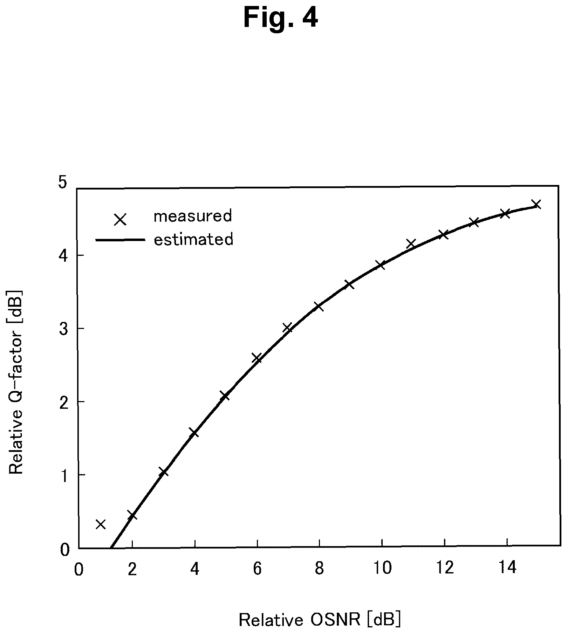

Fig. 4 is a diagram illustrating a result of comparison between the BER-OSNR characteristic estimated by the second calculation unit 133 (a solid line) and an actually measured BER-OSNR characteristic (symbol ×). A vertical axis is expressed by a Q-factor. It can be confirmed that an estimated value and an actually measured value agree well with each other.

### (Another Calculation Method)

The BER-OSNR characteristic can also be calculated according to the following calculation method.

First, the second calculation unit 133 substitutes respective values of the two parameters (SNR_{TPX-in} and SNRᵢₙ) calculated by the first calculation unit 132 into Formula (3), and calculates signal distortion (SNR) caused by the optical transceiver (11 and 12) at a time when the received optical power Pᵢₙ is p. This SNR is SNR_{TRX} in Formula (2).

Thereafter, the second calculation unit 133 calculates signal distortion (SNR_{ASE}) caused by the optical fiber 14 that corresponds to each OSNR (= r) by using a formula on the fourth row of Formula (2), and estimates and calculates signal quality (BER) for each OSNR by combining the signal distortion (SNR_{ASE}) and the calculated signal distortion (SNR (= SNR_{TRX})) caused by the optical transceiver (11 and 12).

### [Operation of Estimation Device]

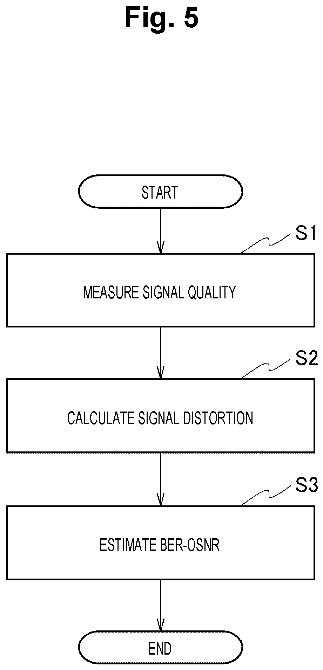

Fig. 5 is a flowchart illustrating a method for calculating the BER-OSNR characteristic that is performed by the estimation device 13.

### Step S1;

The measurement unit 131 measures and records a value (BER) of signal quality for each received optical power Pᵢₙ at the optical receiver 12, while changing received optical power at the optical receiver 12 by adjusting output optical power from the transmission system.

### Step S2;

Next, the first calculation unit 132 calculates a parameter (SNR_{TPX-in}) of signal distortion caused by the optical transceiver (11 and 12) that is independent of the received optical power Pᵢₙ and a parameter (SNRᵢₙ) of signal distortion caused by the optical transceiver (11 and 12) that is dependent on the received optical power Pᵢₙ by using the least-squares method or the like in such a way that a measured value (BER) of signal quality for each received optical power Pᵢₙ that has been measured in step S1 coincides with a calculated value (BER) of signal quality that is calculated according to Formula (3).

### Step S3;

Finally, the second calculation unit 133 estimates and calculates the BER-OSNR characteristic, by substituting respective values of the two parameters (SNR_{TPX-in} and SNRᵢₙ) calculated in step S2 into the extended BER-OSNR model of Formula (2) and calculating signal quality (BER) for each OSNR with respect to predetermined received optical power Pᵢₙ.

### [Advantageous Effects]

According to the present embodiment, the estimation device 13 includes: the measurement unit 131 that measures a value of signal quality for each received optical power at the optical receiver 12, for the optical transmitter 11 and the optical receiver 12 that are connected via the optical fiber 14; the first calculation unit 132 that calculates signal distortion caused by the optical transceiver (11 and 12) that is dependent on the received optical power (the first signal distortion) and signal distortion caused by the optical transceiver (11 and 12) that is independent of the received optical power (the second signal distortion), by using the measured value of the signal quality for each of the received optical powers at the optical receiver 12; and the second calculation unit 133 that calculates the BER-OSNR characteristic of the optical transceiver (11 and 12), by calculating a value of signal quality (for example, a Q-factor or Pre-FEC BER) for each optical noise amount by using the first signal distortion, the second signal distortion, and signal distortion caused by the optical fiber 14 (the third signal distortion) that is calculated from an optical noise amount (OSNR), and therefore the BER-OSNR characteristic of the optical transceiver (11 and 12) can be estimated at a low cost.

In addition, according to the present embodiment, the estimation device 13 of a computer calculates the BER-OSNR characteristic of the optical transceiver (11 and 12), without using an optical device such as an optical amplifier, a variable optical attenuator, an optical noise generation device, a multiplexer, an optical bandpass filter, a demultiplexer, or an optical spectrum analyzer, and therefore it is possible to estimate signal quality and calculate transmission quality at a low cost.

### [Others]

The present disclosure is not limited to the embodiment described above. Various modifications can be made to the present disclosure within the gist of the present disclosure.

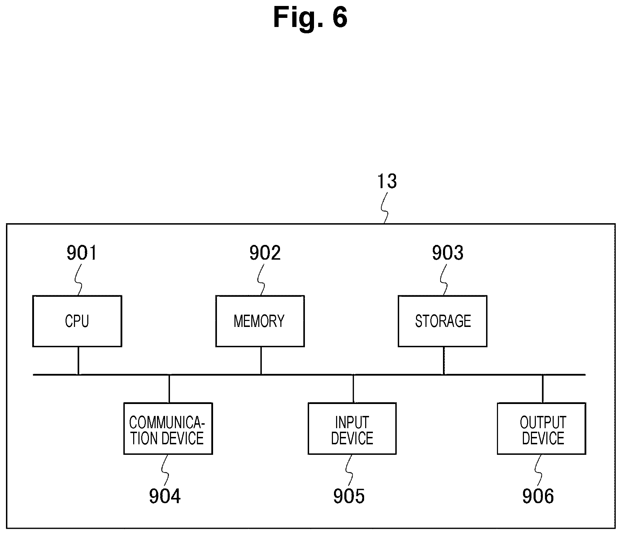

The estimation device 13 of the present embodiment described above can be achieved by using a general-purpose computer system that includes, for example, a CPU 901, a memory 902, a storage 903, a communication device 904, an input device 905, and an output device 906, as illustrated in Fig. 6. The memory 902 and the storage 903 are storage devices. In the computer system, the CPU 901 executes a predetermined program loaded on the memory 902, and therefore each function of the estimation device 13 is achieved.

The estimation device 13 may be implemented by one computer. The estimation device 13 may be implemented by a plurality of computers. The estimation device 13 may be a virtual machine mounted on a computer.

A program for the estimation device 13 can be stored in a computer-readable recording medium such as an HDD, an SSD, a USB memory, a CD, or a DVD. The computer-readable recording medium is, for example, a non-transitory recording medium. The program for the estimation device 13 can also be distributed via a communication network.

### Reference Signs List

- 1: Estimation system
- 11: Optical transmitter
- 12: Optical receiver
- 13: Estimation device
- 14: Optical fiber
- 15: Variable attenuator
- 131: Measurement unit
- 131a: Device control unit
- 131b: Output optical power control unit
- 131c: Received optical power measurement unit
- 131d: Signal quality measurement unit
- 132: First calculation unit
- 133: Second calculation unit
- 901: CPU
- 902: Memory
- 903: Storage
- 904: Communication device
- 905: Input device
- 906: Output device

## Claims

1. An estimation device comprising:
a measurement unit that measures a value of signal quality for each received optical power at an optical receiver, for an optical transmitter and the optical receiver that are connected via a transmission line;
a first calculation unit that calculates first signal distortion caused by the optical transmitter and the optical receiver, the first signal distortion being dependent on a received optical power, and second signal distortion caused by the optical transmitter and the optical receiver, the second signal distortion being independent of the received optical power, by using a measured value of the signal quality for each of the received optical powers at the optical receiver; and
a second calculation unit that calculates a relationship between the signal quality and transmission quality of the optical transmitter and the optical receiver, by calculating a value of the signal quality for each optical noise amount by using the first signal distortion, the second signal distortion, and third signal distortion caused by the transmission line, the third signal distortion being calculated from an optical noise amount.

2. The estimation device according to claim **1,** wherein
the first calculation unit performs
calculating the first signal distortion and the second signal distortion to cause the measured value of the signal quality for each of the received optical powers at the optical receiver to coincide with a calculated value of the signal quality that is calculated from a sum of the first signal distortion multiplied by the received optical power and the second signal distortion.

3. The estimation device according to claim 1, wherein
the second calculation unit performs
calculating the relationship between the signal quality and the transmission quality of the optical transmitter and the optical receiver, by calculating signal distortion caused by the optical transmitter and the optical receiver at a time when the received optical power has a predetermined value, from calculation results of the first signal distortion and the second signal distortion, calculating the third signal distortion that corresponds to each of the optical noise amounts, and combining two calculation results to calculate the value of the signal quality for each of the optical noise amounts.

4. The estimation device according to claim 1, wherein
the second calculation unit performs
calculating the relationship between the signal quality and the transmission quality of the optical transmitter and the optical receiver, by calculating a value of the signal quality for each of the optical noise amounts with respect to a predetermined received optical power by using a formula for calculating a value of the signal quality from a sum of the first signal distortion multiplied by the received optical power, the second signal distortion, and the third signal distortion.

5. The estimation device according to claim 1, wherein
the measurement unit performs
measuring the value of the signal quality for each of the received optical powers at the optical receiver, while changing received optical power at the optical receiver by adjusting output optical power of an optical transmission side.

6. An estimation method performed by an estimation device, the estimation method comprising:
measuring a value of signal quality for each received optical power at an optical receiver, for an optical transmitter and the optical receiver that are connected via a transmission line;
calculating first signal distortion caused by the optical transmitter and the optical receiver, the first signal distortion being dependent on a received optical power, and second signal distortion caused by the optical transmitter and the optical receiver, the second signal distortion being independent of the received optical power, by using a measured value of the signal quality for each of the received optical powers at the optical receiver; and
calculating a relationship between the signal quality and transmission quality of the optical transmitter and the optical receiver, by calculating a value of the signal quality for each optical noise amount by using the first signal distortion, the second signal distortion, and third signal distortion caused by the transmission line, the third signal distortion being calculated from an optical noise amount.
